# EUROPEAN PATENT SPECIFICATION

(11) **EP 1 799 432 B1**
(45) Date of publication and mention of the grant of the patent: **27.01.2010**
(21) Application number: 05799954.2
(22) Date of filing: 23.09.2005
(51) Int. Cl.: B29C 53/06, B65D 5/42, B31B 1/25, B31F 1/08

(54) **METHOD FOR FORMING PACKAGING BLANKS FROM PLASTIC SHEET**
VERFAHREN ZUR HERSTELLUNG VON VERPACKUNGSZUSCHNITTEN AUS KUNSTSTOFFFOLIE
PROCEDE DE FORMATION DE DECOUPE D'EMBALLAGE A PARTIR DE FEUILLES EN PLASTIQUE

(30) Priority: 23.09.2004 US 612607 P
(43) Date of publication of application: 27.06.2007
(73) Proprietor: MeadWestvaco Corporation, Glen Allen, VA 23060 (US)
(72) Inventor: FALAT, Ladislav, Columbia, MD 21044 (US)
(74) Representative: Coulson, Elizabeth Eve
(86) International application number: PCT/US2005/034450
(87) International publication number: WO 2006/034502

(56) References cited:
- EP-A- 0 330 228
- US-A- 4 265 842
- PATENT ABSTRACTS OF JAPAN vol. 1996, no. 08, 30 August 1996 (1996-08-30) & JP 08 085148 A (TOYOBO CO LTD), 2 April 1996 (1996-04-02)

## Description

### BACKGROUND OF THE INVENTION

### 1. Field of the Invention

The subject invention is directed to containers and packaging, and more particularly, to methods of forming containers and packaging from plastic sheeting using ultrasonic energy to create creases or fold lines in the plastic sheeting.

### 2. Bachground of the Related Art

Today plastics are used heavily by the packaging industry. Plastic packaging offers protection against moisture and dirt, safeguards hygiene, and provides an attractive product. There are many different types of plastics used for packaging today, such as polyethylene terephthalate (PET), glycolised polyester (PETG), amorphous polyethylene terephthalate (APET), polyvinyl chloride (PVC), polypropylene, Polylith® (distributed by Granwell Products ), polylactic acid (PLA) and polyethylene, etc.

In order to use plastic sheeting as a substrate for container or carton blank, creases or fold lines must be made in the sheet material. Several techniques are known for creating fold lines in plastic sheet, such as knife-scoring, RF soft creasing and micro-perforation. One method for producing fold lines in a thermoplastic sheet is described in German patent No. 2,236,617. According to this method, a knife edge is resistance heated to a temperature above the melting temperature of the plastic and the edge is pressed into the plastic sheet. Contrary to the explanation given in the patent, it has been found that a spring back resilience in the folded edges cannot be avoided to the degree desired. This is apparently due to the fact that the highest temperature is found along the contact surface between the knife edge and the plastic. From there, the temperature decreases towards the inside of the plastic material.

Soft-creasing of plastic substrates for packaging applications is desirable because it results in a package corner or hinge that can be folded multiple times without breaking, and does not whiten as a result of repeated bending, as would hard-creased polyvinyl chloride (PVC). A soft-crease can be defined by a bend ratio, which is a measure of the bending stiffness that can be quantified as the force required to bend a creased substrate to a 90° angle at the fold line, divided by the force required to bend the same uncreased substrate to 90°. A soft-crease typically has a bend ratio of about 0.2 to about 0.4.

Currently, soft-creasing PVC is being done by radio frequency (RF) energy applied during creasing. PVC is considered to soft-crease well because it is a relatively polar molecule with a dielectric constant in the range of about 4 to about 8. A higher dielectric constant indicates greater polarity and greater ability to absorb RF energy. RF energy heats the substrate to a softening point in the area of the score or crease, and resolidification of the material results in a durable refoldable hinge or corner thereafter.

Amorphous Polyethylene Terephthalate (APET) is becoming a more desirable substrate competing with PVC because it is more environmentally friendly in terms of recycling or incineration. However, the dielectric constant for APET is significantly lower (*e*.*g*., about 2.5 to about 4.5) than PVC and consequently it is not readily soft-creased by application of RF.

Current practice in the industry is to hard-crease APET with sufficient force, resulting in higher bend ratios, a package blank that is more difficult to manipulate during gluing and erecting, and hinges requiring more effort to open and close. Hard-creased blanks also have more memory, in that they are more likely to resist bending.

Alternatively, APET blanks are microperforated, meaning that the score areas that will become corners and hinges are cut at regularly spaced intervals creating a corner or hinge with alternating through-cut and land (*i*.*e*., uncut, unscored) areas. It has been found that microperforated packages are not as aesthetically pleasing to consumers as soft-scored packages.

The prior art teaches the use of ultrasonic energy to melt, weld, and seal polymeric materials. For example, U.S. Patent No. 4,224,091 to Sager, which is herein incorporated by reference in its entirety, is directed to a method of producing a corner in a flexible thermoplastic channel structure. In the disclosed method, ultrasonic energy is used to cut away a portion of the channel structure and to seal/weld adjacent leg portions so as to form a corner. Additionally, U.S. Patent No. 5,061,331 to Gute, which is herein incorporated by reference in its entirety, describes an apparatus for cutting and sealing the cut edges of semipermeable and at least partially thermoplastic fabric material. Gute's apparatus may be particularly adapted to cut and seal cut edges of automotive safety air bag material.

The prior art does not teach the use of ultrasound applied to folding box packaging blanks made from polymeric sheet to create soft bendable creases for the formation of box corners and hinges. Furthermore, the prior art does not teach the use of ultrasound to crease APET, in a fashion similar to the RF creasing of PVC, in creating packaging blanks with soft creases. Currently, there is no commercially available means to soft-crease APET.

Thus, there is a compelling interest in the development of containers and packaging fabricated of APET or other substrates, such as plastics like PVC, PET, polypropylene (PP), glycolised polyester (PETG), polyethylene (PE), Polylith® and PLA, which include soft-creases or fold lines, and methods of using ultrasonic energy to manufacture the same.
from JP 08-085148 A a method for forming a container blank from polymeric material, for example polyethylene terephthalate (APET) is known. The method comprises forming fold lines in a surface of the polymeric material by means of a creasing tool resonating at an ultrasonic frequency so as to apply ultrasonic energy to the polymeric material to form the fold line therein.

### SUMMARY OF THE DISCLOSURE

The invention is described by the features of claims 1, 10, 18 and 25.
The present disclosure is directed to a method for forming a polymeric container blank having flexible fold lines which includes the steps of, among other steps, providing a sheet of polymeric material for use as a substrate for a container blank, providing a creasing tool which includes an applicator having a substantially flat lower surface that is spaced apart from a creasing rule and placing the polymeric material between the applicator and the creasing rule such that a first surface of the polymeric material is in contact with the lower surface of the applicator and a second surface of the material in in contact with the creasing rule. In this embodiment, the inventive method further includes the step of resonating the applicator of the creating tool at an ultrasonic frequency so as to apply ultrasonic energy to the polymeric material and form at least one flexible fold line therein. Preferably, the fold lines created in the polymeric material have a bend ratio of between about 0.2 and 0.4.

It is preferred that the step of resonating the applicator at an ultrasonic frequency is performed for about 50 milliseconds. In certain embodiments of the invention disclosed herein the polymeric material is APET sheet. Alternatively, the polymeric material can be composed of other suitable plastics, such as for example, PVC, PET, PETG, polypropylene, PLA, Polylith® and polyethylene. It is presently envisioned that the polymeric material has a thickness of between about 0,127 mm (0.005 in) and about 1.27 mm (0.050 in).

In certain embodiments, it is envisioned that the creasing rule and applicator are adapted and configured for forming more than one flexible fold line at a time. For example, the lower surface of the applicator can have a width and stiffness sufficient to impart all of the creases for a single packaging blank. Moreover, in the disclosed method it is preferred that between about 207 to about 414 kPa (about 30 to about 60 pounds) of pressure is applied to the substrate with the applicator prior to the formation of the flexible fold line. Once the resonation of the applicator is initiated, the applicator will press into the softened polymeric sheet. It is advantageous to limit the depth of the penetration of the applicator to a maximum of about 50 percent of the material thickness. Preferable the gap between the resonating applicator and the creasing rule is a minimum of 50 percent of the material thickness to about 100 percent of the material thickness. Most preferably, the gap is a minimum of about 80 percent of the material thickness.

The present disclosure is further directed to a method for forming a polymeric container blank having flexible fold lines which includes the steps of, among others, providing a sheet of polymeric material for use as a substrate for a container blank, the polymeric material having opposed first and second surfaces; positioning the polymeric material between an applicator having a substantially flat lower surface and a creasing rule; and applying between about 207 to about 414 kPa (about 30 to about 60 pounds) of pressure to the polymeric material with the applicator and creasing rule. In addition, the method include resonating the applicator at an ultrasonic frequency so as to apply ultrasonic energy to the polymeric material and form at least one flexible fold line therein. It is preferred that the gap between the applicator and the creasing rule be maintained at a minimum of about 50 to 100 percent of the thickness of the polymeric material, but preferably about 80 percent.

Also disclosed in a method for forming a container blank having flexible fold lines from a sheet of APET. A representative method includes providing a sheet of APET for use as a substrate for a container blank, the sheet of APET; and applying ultrasonic energy to the sheet of APET so as to form a soft-crease therein by disposing the sheet of APET between a resonating applicator horn and a stationary creasing anvil.

It is presently preferred that the applicator horn has a substantially flat lower surface which contacts the APET sheet. Additionally, it is envisioned that the polymeric material has a thickness of between about 0.127 mm (0.005 in) and about 1.27 mm (0.050 in) and the flexible fold line has a bend ratio of between about 0.2 and 0.4.

The present disclosure is also directed to packages and containers constructed of a substrate in which ultrasonic energy is used to define soft-creases that can be used to facilitate the package or container in operation or to place the package or container in useable form.

These and other aspects of the present invention will become more readily apparent to those having ordinary skill in the art from the drawings and the following description of the invention.

### BRIEF DESCRIPTION OF THE DRAWINGS

So that those having ordinary skill in the art will better understand how to make and use the subject invention, embodiments thereof will be described below with reference to the drawings wherein:

FIG. 1 is a plan view of a container blank having a plurality of panels and end flaps, wherein adjacent panels and flaps are separated by fold lines formed in accordance with the present invention;

FIG. 2 is a side elevational view of a partially assembled container, wherein the container blank of FIG. 1 has been folded along the fold lines which separate the plurality of panels from one another;

FIG. 3 is a side elevational view of a partially assembled container, wherein the top portion of the container remains open to facilitate insertion of a product;

FIG. 4 is a top plan view of the container of FIG. 3; and

FIG. 5 is a perspective view of portions of a representative apparatus for performing the method of the present invention.

### DETAILED DESCRIPTION OF PREFERRED EMBODIMENTS

The present invention provides a method of using ultrasonic energy to form soft-creases in substrates, preferably pliable substrates, such as plastics, and a substrate having desirable characteristics formed by the method of the present invention. The substrates fabricated in accordance with this invention can be used in a variety of applications; packaging or containers are discussed herein as exemplary embodiments for which the present invention may be employed, but are not intended to limit the scope of the present invention.

Conventional containers or packages, such as retail containers for cosmetics, pharmaceutical, and computer related items are typically made from materials, such as paperboard and the like, that are easily torn and are susceptible to moisture damage. Often, at least one side of the conventional substrate is printed with information, such as product description, graphic, and advertising information. The conventional substrate is then formed into individual container blanks by cutting and creasing the substrate using well-known techniques. An exemplary technique is to feed a continuous web substrate into a die cutting assembly and individual container blanks are cut from the web by a die cutter. An exemplary cutting technique involves the use of a platen die cutter assembly. After the individual container blank is cut from the web, fold lines and the like can be formed on the container blank typically after exiting the die cutting apparatus. Conventional containers are formed by securing parts of the container blank to each other with adhesives. One end is left open so that a product can be placed in the container. The container is closed by securing a flap over the opening.

As noted above, there are several disadvantages associated with the use of conventional paperboard substrates for container blanks and therefore, the present inventor has developed a method for making container blanks from plastic/polymeric substrates. More particularly, the method of the present invention uses ultrasonic energy to create creases in the plastic substrate in lieu of the hard creasing technique that is used for paperboard substrates.

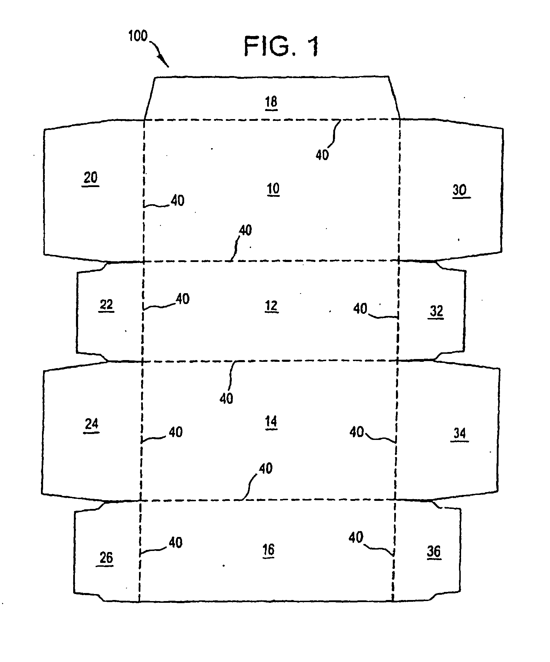

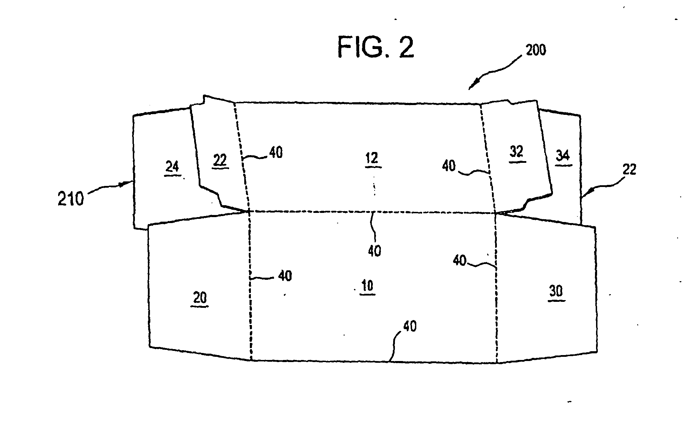

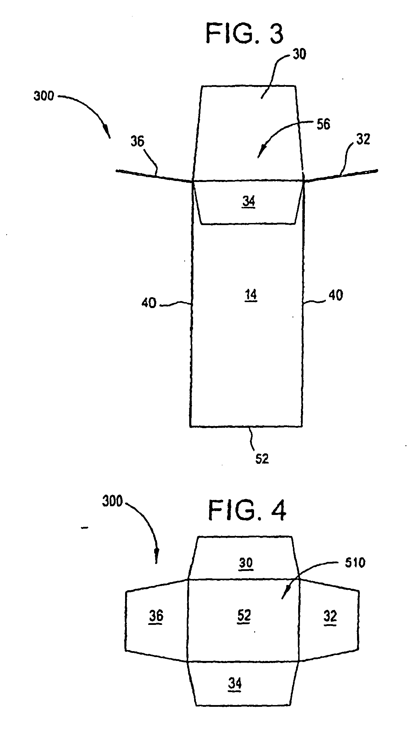

FIGS 1-4 illustrate an exemplary container blank 100 according to the present invention. Blank 100 has been formed of a plastic or polymeric substrate, such as APET. The blank 100 has four main panels 10, 12, 14, 16. A glue flap 18 is shown secured to a first panel 10. Also illustrated are fold lines 40 that separate the main panels 10, 12, 14, 16 from the remainder of the blank 100.

Flaps 20, 22, 24, 26 are shown seeded to one end of the main panels 10, 12, 14, 16 and flaps 30, 32, 34, 36 are shown secured to an opposite end of the main panels. It is to be understood that many other shapes and configurations for a container blank are possible. For example, a container could have more of less main panels, as well as, more or less flaps than illustrated. The container blank 100 of FIGS 1-4 is provided as a general illustration of a container blank. It is to further be understood that a container blank could also be designed to mate with a blister container or a packaging shell. Still further, a container blank could also be designed to wrap around another box, container, package, or product. In addition, the container blank could have one or more apertures. For example, the container could also have a folding flap to secure a blister package containing disposable razors or pills. Furthermore, any apertures could be covered with transparent materials.

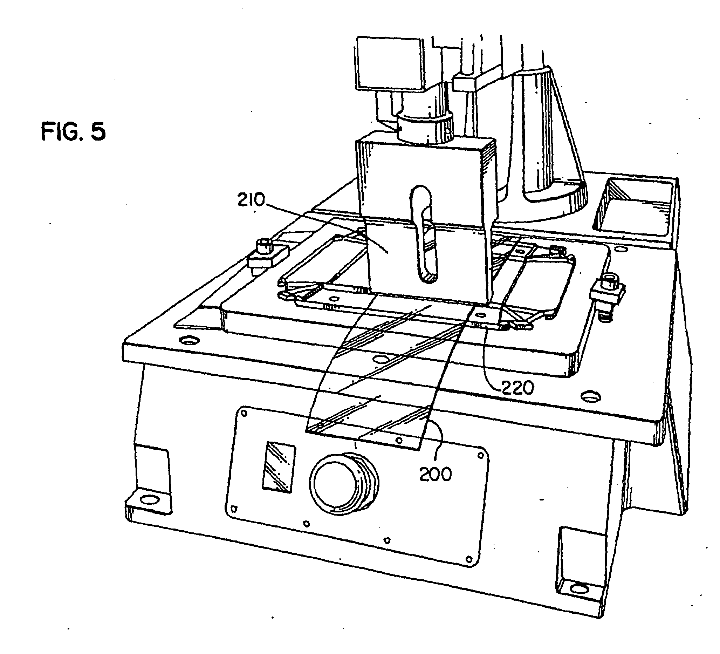

In laboratory experiments conducted by the present inventor, APET, PVC, and other plastic substrates have been scored or creased using ultrasonic energy using the device as illustrated in FIG. 5. Ultrasonic energy is applied to the substrate 200 by contacting the substrate on one side by the ultrasonic applicator (*i*.*e*., the "horn") 210 and on the other side by a creasing rule 220. The horn 210 is lowered onto the substrate so as to apply roughly 207 to 414 kPa (30 to 60 pounds) of pressure thereto. Then, the born 210 is resonated for approximately 50 milliseconds and softens the substrate 200. Because of the initial pressure applied to the substrate 200, the horn 210 presses into the substrate 200 when it softens. It has been fund that limiting the depth of the penetration of the horn 210 to a maximum of 50% of the substrate thickness (preferably 20%) prevents the ultrasonic energy from cutting or weakening the material. The depth of the penetration allowed is a function of the size of the ultrasonic pulse. After the 50 milliseconds has elapsed, the horn is withdrawn.

The method in accordance with the present invention utilizes ultrasonic energy, via the ultrasonic applicator 210 or any other ultrasonic-emitting device, to soft-crease the substrate 200 in a way that provides a bend ratio from about 0.2 to about 0.4. As shown in this figure, the ultrasonic applicator 210 is directed to apply ultrasonic energy onto a first surface of substrate 200 while a support edge (i.e., creasing rule) 220 is applied in the same general location on the second opposing surface of the substrate.

Unlike RF creasing, ultrasound creasing can be applied to most plastics equally effectively because the ability to induce vibrations in the substrate is not dependent on the dielectric constant, but rather depends on the dampening characteristics of the substrate. Moreover, the application of ultrasonic energy is extremely fast, such as for example, 50 milliseconds, and localized to the fold line. Additionally, application times can range from seconds to as little as milliseconds.

In contrast, attempting to crease APET by a heated scoring die, for example, results in thermal distortion of the entire sheet because of heat radiation of the heated die. Ultrasonic scoring (similarly with respect to RF) does not cause thermal distortions because the energy is localized only to the area of intimate contact.

It has been found that score bend ratios from ultrasonic creasing/scoring advantageously range from about 0.2 to about 0.4, by controlling the duration of the sound pulse and by controlling the gap between the applicator horn and the rule. It has also been found that the application of ultrasonic energy to plastic material is more efficient at the lower end of the ultrasonic spectrum (i.e., 20 mHz). It has also been found that the resulting scores have been bent and straightened 500+ times without hinge failure.

The method of the present invention is particularly useful for soft-creasing and cutting of packaging blanks, printed or unprinted, made from plastic (APET, PVC, PETG, PP, PE, Polylith, PLA) film (or sheeting), from about 0,127 mm (0.005") to about 1,27 mm (0.050") thick, but can be used with substrates of other sizes as well.

While exemplary methods and applications of the methods of the present disclosure, have been described herein, it should also be understood that the foregoing is only illustrative of exemplary and/or preferred embodiments, as well as principles of the subject invention, and that various modifications can be made by those skilled in the art without departing from the scope and spirit of the invention as defined by the appended claims.

Therefore, the described embodiments should not be considered as limiting of the present invention in any way. Accordingly, the present disclosure embraces alternatives, modifications and variations of the present invention as fall within the scope of the present claims.

## Claims

1. A method for forming a polymeric container blank (100) having flexible fold lines (40) comprising:
a) providing a sheet of polymeric material for use as a substrate (200) for a container blank (100), the polymeric material having opposed first and second surfaces;
b) providing a creasing tool which includes an applicator (210) having a substantially flat lower surface that is spaced apart from a creasing rule (220);
c) placing the polymeric material between the applicator (210) and the creasing rule (220) such that the first surface of the material is in contact with the lower surface of the applicator (210) and the second surface of the material is in contact with the creasing rule (220);
d) resonating the applicator (210) at an ultrasonic frequency so as to apply ultrasonic energy to the polymeric material for about 50 milliseconds and form at least one flexible fold line (40) therein.

2. A method as recited in claim 1, wherein the polymeric material is APET.

3. A method as recited in claim 1, wherein the polymeric material is selected from the group consisting of APET, PVC, PET, PETG, polypropylene, Polylith, polylactic acid and polyethylene.

4. A method as recited in claim 1, wherein the polymeric material has a thickness of between about 0.127 mm and about 1.27 mm.

5. A method as recited in claim 1, wherein the creasing rule (220) and applicator (210) are adapted and configured for forming more than one flexible fold line (40) at a time.

6. A method as recited in claim 1, further comprising the step of applying between about 207 to about 414 kPa N of pressure to the substrate (200) with the applicator (210) prior to resonating the applicator (210) so as to hold the polymeric material prior to the formation of the flexible fold line (40).

7. A method as recited in claim 6, further comprising the step of maintaining a minimum gap between the applicator (210) and the creasing rule (220) of between about 50 to about 100 percent of the thickness of the polymeric material during the formation of the flexible fold line (40).

8. A method as recited in claim 7, wherein the gap between the applicator (210) and the creasing rule (220) is maintained at about 80 percent of the thickness of the polymeric material during the formation of the flexible fold line (40).

9. A method as recited in claim 1, wherein the flexible fold line (40) has a bend ratio of between about 0.2 and 0.4.

10. A method for forming a polymeric container blank (100) having flexible fold lines (40) comprising:
a) providing a sheet of polymeric material for use as a substrate (200) for a container blank (100), the polymeric material having opposed first and second surfaces;
b) positioning the polymeric material between an applicator (210) having a substantially flat lower surface and a creasing rule (220);
c) applying between about 207 to about 414 kPa of pressure to the polymeric material with the applicator (210) and creasing rule (220);
d) resonating the applicator (210) at an ultrasonic frequency for about 50 milliseconds so as to apply ultrasonic energy to the polymeric material and form at least one flexible fold line (40) therein.

11. A method as recited in claim 10, wherein the flexible fold line (40) has a bend ratio of between about 0.2 and 0.4.

12. A method as recited in claim 10, wherein the polymeric material is APET.

13. A method as recited In claim 10, wherein the polymeric material is selected from the group consisting of APET, PVC, PET, PETG, polypropylene, Polylith, polylactic acid and polyethylene.

14. A method as recited in claim 10, wherein the polymeric material has a thickness of between about 0.127 mm and about 1.27 mm.

15. A method as recited in claim 10, wherein the creasing rule (220) and applicator (210) are adapted and configured for forming more than one flexible fold line (40) at a time.

16. A method as recited in claim 10, further comprising the step of maintaining a minimum gap between the applicator (210) and the creasing rule (220) between about 50 to about 100 percent of the thickness of the polymeric material during the formation of the flexible fold line (40).

17. A method as recited in claim 16, wherein the gap between the applicator (210) and the creasing rule (220) is maintained at about 80 percent of the thickness of the polymeric material during the formation of the flexible fold line (40).

18. A method for forming a container blank (100) having flexible fold lines . (40) from a sheet of APET comprising:
a) providing a sheet of APET for use as a substrate (200) for a container blank (100); and
b) applying ultrasonic energy to the sheet of APET for about 50 milliseconds so as to form a soft-crease (40) therein by disposing the sheet of APET between a resonating applicator horn (210) and a stationary creasing anvil (220).

19. A method as recited in claim 18, wherein the applicator horn (210) has a substantially flat lower surface which contacts the APET sheet.

20. A method as recited in claim 18, wherein the APET sheet has a thickness of between about 0.127 mm and about 1.27 mm.

21. A method as recited in claim 18, wherein the flexible fold line (40) has a bend ratio of between about 0.2 and 0.4.

22. A method as recited in claim 18, further comprising the step of applying between about 207 to about 414 kPa of pressure to the APET to of pressure to the APET sheet with the applicator (210) prior to resonating the applicator (210) so as to hold the APET sheet prior to the formation of the flexible fold line (40).

23. A method as recited in claim 22, further comprising the step of maintaining a minimum gap between the applicator (210) and the creasing rule (220) of between about 50 to about 100 percent of the thickness of the APET sheet during the formation of the flexible fold line (40).

24. A method as recited in claim 23, wherein the gap between the applicator (210) and the creasing rule (220) is maintained at about 80 percent of the thickness of the APET sheet during the formation of the flexible fold line (40).

25. A method for forming a container blank (100) having flexible fold lines (40) from a sheet of polymeric material comprising:
a) providing a sheet of polymeric material for use ass a substrate (200) for a container blank (100); and
b) applying ultrasonic energy for about 50 milliseconds to the sheet of polymeric material so as to form a soft-crease (40) therein by disposing the sheet of polymeric material between a resonating applicator horn (210) and a stationary creasing anvil (220) and maintaining a minimum gap between the horn (210) and the creasing anvil (220) of between about 50 to about 100 percent of the material thickness, wherein the resulting soft-crease (40) has a ratio of between about 0.2 and 0.4.

26. A container blank formed by the method of any of claims 1 to 25.

27. A package formed from a container blank formed by the method of any of claims 1 to 25.

## Patentansprüche

1. Verfahren zum Ausbilden eines Polymerbehälterzuschnitts (100) mit flexiblen Faltlinien (40), umfassend:
a) das Bereitstellen eines Bogens aus Polymermaterial für die Verwendung als ein Substrat (200) für einen Behälterzuschnitt (100), wobei das Polymermaterial gegenüberliegende erste und zweite Seiten aufweist;
b) das Bereitstellen eines Faltwerkzeugs, das eine Aufbringeinheit (210) umfasst, die eine im Wesentlichen flache Unterseite aufweist, die von einer Faltleiste (220) beabstandet ist;
c) das Anordnen des Polymermaterials zwischen der Aufbringeinheit (210) und der Faltleiste (220), so dass die erste Seite des Materials in Berührung mit der Unterseite der Aufbringeinheit (210) ist und die zweite Seite des Materials in Berührung mit der Faltleiste (220) ist;
d) das Erzeugen einer Resonanz der Aufbringeinheit (210) bei einer Ultraschallfrequenz, um über einen Zeitraum von ungefähr 50 Millisekunden Ultraschallenergie auf das Polymermaterial aufzubringen und um wenigstens eine flexible Faltlinie (40) darin auszubilden.

2. Verfahren nach Anspruch 1, wobei das Polymermaterial APET ist.

3. Verfahren nach Anspruch 1, wobei das Polymermaterial aus der Gruppe ausgewählt ist, bestehend aus APET, PVC, PET, PETG, Polypropylen, Polylith, Polylactid und Polyethylen.

4. Verfahren nach Anspruch 1, wobei das Polymermaterial eine Dicke zwischen ungefähr 0,127 mm und ungefähr 1,27 mm aufweist.

5. Verfahren nach Anspruch 1, wobei die Faltleiste (220) und die Aufbringeinheit (210) ausgestaltet und angepasst sind, gleichzeitig mehr als eine flexible Faltlinie (40) auszubilden.

6. Verfahren nach Anspruch 1, wobei das Verfahren ferner den Schritt des Aufbringens eines Drucks von ungefähr zwischen 207 bis ungefähr 414 kPa auf das Substrat (200) mit der Aufbringeinheit (210) umfasst, und zwar vor dem Erzeugen der Resonanz der Aufbringeinheit (210), um das Polymermaterial vor der Ausbildung der flexiblen Faltlinie (40) zu halten.

7. Verfahren nach Anspruch 6, wobei das Verfahren ferner den Schritt des Beibehaltens einer minimalen Lücke zwischen der Aufbringeinheit (210) und der Faltleiste (220) von zwischen ungefähr 50 bis ungefähr 100% der Dicke des Polymermaterials während der Ausbildung der flexiblen Faltlinie (40) umfasst.

8. Verfahren nach Anspruch 7, wobei die Lücke zwischen der Aufbringeinheit (210) und der Faltleiste (220) bei ungefähr 80% der Dicke des Polymermaterials während der Ausbildung der flexiblen Faltlinie (40) beibehalten wird.

9. Verfahren nach Anspruch 1, wobei die flexible Faltlinie (40) ein Biegeverhältnis von ungefähr zwischen 0,2 und 0,4 aufweist.

10. Verfahren zum Ausbilden eines Polymerbehälterzuschnitts (100) mit flexiblen Faltlinien (40), umfassend:
a) das Bereitstellen eines Bogens von Polymermaterial für die Verwendung als ein Substrat (200) für einen Behälterzuschnitt (100), wobei das Polymermaterial gegenüberliegende erste und zweite Seiten aufweist;
b) das Positionieren des Polymermaterials zwischen einer Aufbringeinheit (210) mit einer im Wesentlichen flachen Unterseite und einer Faltleiste (220);
c) das Aufbringen eines Drucks von zwischen ungefähr 207 bis ungefähr 414 kPa auf das Polymermaterial mit der Aufbringeinheit (210) und der Faltleiste (220);
d) das Erzeugen einer Resonanz der Aufbringeinheit (210) bei einer Ultraschallfrequenz über einen Zeitraum von ungefähr 50 Nüllisekunden, um Ultraschallenergie auf das Polymermaterial aufzubringen und wenigstens eine flexible Faltlinie (40) darin auszubilden.

11. Verfahren nach Anspruch 10, wobei die flexible Faltlinie (40) ein Biegeverhältnis von ungefähr zwischen 0,2 und 0,4 aufweist.

12. Verfahren nach Anspruch 10, wobei das Polymermaterial APET ist.

13. Verfahren nach Anspruch 10, wobei das Polymermaterial aus der Gruppe ausgewählt ist, bestehend aus APET, PVC, PET, PETG, Polypropylen, Polylith, Polylactid und Polyethylen.

14. Verfahren nach Anspruch 10, wobei das Polymermaterial eine Dicke zwischen ungefähr 0,127 mm und ungefähr 1,27 mm aufweist.

15. Verfahren nach Anspruch 10, wobei die Faltleiste (220) und die Aufbringeinheit (210) ausgestaltet und angepasst sind, gleichzeitig mehr als eine flexible Faltlinie (40) auszubilden.

16. Verfahren nach Anspruch 10, wobei das Verfahren ferner den Schritt des Beibehaltens einer minimalen Lücke zwischen der Aufbringeinheit (210) und der Faltleiste (220) von zwischen ungefähr 50 bis ungefähr 100% der Dicke des Polymermaterials während der Ausbildung der flexiblen Faltlinie (40) umfasst.

17. Verfahren nach Anspruch 16, wobei die Lücke zwischen der Aufbringeinheit (210) und der Faltleiste (220) bei ungefähr 80% der Dicke des Polymermaterials während der Ausbildung der flexiblen Faltlinie (40) beibehalten wird.

18. Verfahren zum Ausbilden eines Behälterzuschnitts (100) mit flexiblen Faltlinien (40) aus einem APET-Bogen, umfassend:
a) das Bereitstellen eines Bogens aus APET für die Verwendung als ein Substrat (200) für einen Behälterzuschnitt (100); und
b) das Aufbringen von Ultraschallenergie auf den APET-Bogen über einen Zeitraum von ungefähr 50 Millisekunden, um eine weiche Faltung (40) darin auszubilden, indem der APET-Bogen zwischen einem Aufbringeinheitsschalltrichter (210) in Resonanz und einem stationären Faltamboss (220) angeordnet wird.

19. Verfahren nach Anspruch 18, wobei der Aufbringeinheitsschalltrichter (210) eine im Wesentlichen flache Unterseite aufweist, die den APET-Bogen berührt.

20. Verfahren nach Anspruch 18, wobei der APET-Bogen eine Dicke von ungefähr zwischen 0,127 mm und ungefähr 1,27 mm aufweist.

21. Verfahren nach Anspruch 18, wobei die flexible Faltlinie (40) ein Biegeverhältnis von zwischen ungefähr 0,2 und 0,4 aufweist.

22. Verfahren nach Anspruch 18, wobei das Verfahren ferner den Schritt des Aufbringens eines Drucks von ungefähr zwischen 207 bis ungefähr 414 kPa auf den APET-Bogen mit der Aufbringeinheit (210) vor dem Erzeugen der Resonanz der Aufbringeinheit (210) umfasst, um vor der Ausbildung der flexiblen Faltlinie (40) den APET-Bogen zu halten.

23. Verfahren nach Anspruch 22, wobei das Verfahren ferner den Schritt des Beibehaltens einer minimalen Lücke zwischen der Aufbringeinheit (210) und der Faltleiste (220) von zwischen ungefähr 50 bis ungefähr 100% der Dicke des APET-Bogens während der Ausbildung der flexiblen Faltlinie (40) umfasst.

24. Verfahren nach Anspruch 23, wobei die Lücke zwischen der Aufbringeinheit (210) und der Faltleiste (220) bei ungefähr 80% der Dicke des APET-Bogens während der Ausbildung der flexiblen Faltlinie (40) beibehalten wird.

25. Verfahren zum Ausbilden eines Behälterzuschnitts (100) mit flexiblen Faltlinien (40) aus einem Bogen Polymermaterial, umfassend:
a) das Bereitstellen eines Bogens aus Polymermaterial für die Verwendung als ein Substrat (200) für einen Behälterzuschnitt (100); und
b) das Aufbringen von Ultraschallenergie über einen Zeitraum von ungefähr 50 Millisekunden auf den Bogen von Polymermaterial, um eine weiche Faltung (40) darin auszubilden, indem der Bogen aus Polymermaterial zwischen einem Aufbringeinheitsschalltrichter (210) in Resonanz und einem stationären Faltamboss (220) angeordnet wird und eine minimale Lücke zwischen dem Schalltrichter (210) und dem Faltamboss (220) von ungefähr zwischen 50 bis ungefähr 100% der Materialdicke beibehalten wird, wobei die entstehende weiche Faltung (40) ein Verhältnis von ungefähr 0,2 und 0,4 aufweist.

26. Ein Container leer gebildet durch das Verfahren nach einem der Ansprüche 1 bis 25.

27. Ein Paket, gebildet aus einem Behälter leer nach dem Verfahren nach einem der Ansprüche 1 bis 25 gebildet.

## Revendications

1. Procédé de formation d'une découpe de contenant polymère (100) comportant des lignes de pliage souples (40) qui comprend les étapes consistant à:
a) fournir une feuille de matériau polymère servant de substrat (200) pour une découpe de contenant (100), le matériau polymère présentant les premières et secondes surfaces opposées;
b) fournir un outil de rainage qui comporte un applicateur (210) à surface inférieure sensiblement plate qui est espacé d'un filet raineur (220)
c) placer le matériau polymère entre l'applicateur (210) et le filet raineur (220) de telle manière qu'une première surface du matériau polymère soit en contact avec la surface inférieure de l'applicateur (210) et une seconde surface du matériau soit en contact avec le filet raineur (220);
d) faire résonner l'applicateur (210) à une certaine fréquence ultrasonore de manière à appliquer une énergie ultrasonore au matériau polymère pendant environ 50 millisecondes et à former au moins une ligne de pliage souple (40) sur celui-ci.

2. Procédé tel que défini dans la revendication 1, dans lequel le matériau polymère utilisé est un polyéthylène téréphtalate amorphe (APET).

3. Procédé tel que défini dans la revendication 1, dans lequel le matériau polymère est sélectionné parmi le groupe consistant en le polyéthylène téréphtalate amorphe (APET), le polychlorure de vinyle (PVC), le polyéthylène téréphtalate (PET), le polyester glycolisé (PETG), le polypropylène, le Polylith (papier synthétique), l'acide polylactique et le polyéthylène.

4. Procédé tel que défini dans la revendication 1, dans lequel le matériau polymère présente une épaisseur variant entre environ 0,127 mm et environ 1,27 mm.

5. Procédé tel que défini dans la revendication 1, dans lequel le filet raineur (220) et l'applicateur (210) sont adaptés et configurés afin de pouvoir former plus qu'une ligne de pliage souple (40) à la fois.

6. Procédé tel que défini dans la revendication 1, comportant en outre l'étape qui consiste à appliquer une force variant entre environ 207 et environ 414 kPa sur le substrat (200) au moyen de l'applicateur (210) avant de faire résonner l'applicateur (210) afin de fixer le matériau polymère avant la formation de la ligne de pliage souple (40).

7. Procédé tel que défini dans la revendication 6, comportant en outre l'étape qui consiste à maintenir, au cours de la formation de la ligne de pliage souple (40), un espace minimum entre l'applicateur (210) et le filet raineur (220) correspondant à environ 50 jusqu'à environ 100 pourcent de l'épaisseur du matériau polymère.

8. Procédé tel que défini dans la revendication 7, dans lequel l'espace entre l'applicateur (210) et le filet raineur (220) est maintenu à environ 80 pourcent de l'épaisseur du matériau polymère au cours de la formation de la ligne de pliage souple (40).

9. Procédé tel que défini dans la revendication 1, dans lequel la ligne de pliage souple (40) présente un coefficient de flexion compris entre environ 0,2 et 0,4.

10. Procédé de formation d'une découpe de contenant polymère (100) comportant des lignes de pliage souples (40) qui comprend les étapes consistant à:
a) fournir une feuille de matériau polymère servant de substrat (200) pour une découpe de contenant (100), le matériau polymère présentant les premières et secondes surfaces opposées;
b) placer le matériau polymère entre un applicateur (210) à surface inférieure sensiblement plate et un filet raineur (220);
c) appliquer une force variant entre environ 207 et environ 414 kPa sur le matériau polymère au moyen de l'applicateur (210) et du filet raineur (220) ;
d) faire résonner l'applicateur (210) à une certaine fréquence ultrasonore pendant approximativement 50 millisecondes de manière à appliquer une énergie ultrasonore au matériau polymère et à former au moins une ligne de pliage souple (40) sur celui-ci.

11. Procédé tel que défini dans la revendication 10, dans lequel la ligne de pliage souple (40) présente un coefficient de flexion compris entre environ 0,2 et 0,4.

12. Procédé tel que défini dans la revendication 10, dans lequel le matériau polymère est un polyéthylène téréphtalate amorphe (APET).

13. Procédé tel que défini dans la revendication 10, dans lequel le matériau polymère est sélectionné parmi le groupe consistant en le polyéthylène téréphtalate amorphe (APET), le polychlorure de vinyle (PVC), le polyéthylène téréphtalate (PET), le polyester glycolisé (PETG), le polypropylène, le Polylith (papier synthétique), l'acide polylactique et le polyéthylène.

14. Procédé tel que défini dans la revendication 10, dans lequel le matériau polymère présente une épaisseur variant d'environ 0,127 mm à environ 1,27 mm.

15. Procédé tel que défini dans la revendication 10, dans lequel le filet raineur (220) et l'applicateur (210) sont adaptés et configurés afin de pouvoir former plus qu'une ligne de pliage souple (40) à la fois.

16. Procédé tel que défini dans la revendication 10, comportant en outre l'étape qui consiste à maintenir un espace minimum entre l'applicateur (210) et le filet raineur (220) correspondant à environ 50 jusqu'à environ 100 pourcent de l'épaisseur du matériau polymère au cours de la formation de la ligne de pliage souple (40).

17. Procédé tel que défini dans la revendication 16, dans lequel l'espace entre l'applicateur (210) et le filet raineur (220) est maintenu à environ 80 pourcent de l'épaisseur du matériau polymère au cours de la formation de la ligne de pliage souple (40).

18. Procédé de formation d'une découpe de contenant (100) présentant des lignes de pliage souples (40) à partir d'une feuille en APET, qui comprend les étapes consistant à:
a) fournir une feuille en APET pour son utilisation comme un substrat (200) d'une découpe de contenant (100); et
b) appliquer une énergie ultrasonore à la feuille en APET pendant environ 50 millisecondes de manière à former une rainure souple (40) sur celle-ci en disposant la feuille en APET entre un pavillon applicateur résonant (210) et une enclume de rainage fixe (220).

19. Procédé tel que défini dans la revendication 18, dans lequel le pavillon applicateur (210) présente une surface inférieure sensiblement plate qui vient en contact avec la feuille APET.

20. Procédé tel que défini dans la revendication 18, dans lequel la feuille APET présente une épaisseur variant d'environ 0,127 mm à environ 1,27 mm.

21. Procédé tel que défini dans la revendication 18, dans lequel la ligne de pliage souple (40) présente un coefficient de flexion variant d'environ 0,2 à 0,4.

22. Procédé tel que défini dans la revendication 18, comportant en outre l'étape qui consiste à appliquer, au moyen de l'applicateur (210) et préalablement à l'étape qui consiste à faire résonner l'applicateur (210), une force variant entre environ 207 et environ 414 kPa sur la feuille APET afin de pouvoir fixer la feuille APET avant la formation de la ligne de pliage souple (40).

23. Procédé tel que défini dans la revendication 22, comportant en outre l'étape qui consiste à maintenir, au cours de la formation de la ligne de pliage souple (40), un espace minimum entre l'applicateur (210) et le filet raineur (220) qui correspond à environ 50 jusqu'à environ 100 pourcent de l'épaisseur de la feuille APET.

24. Procédé tel que défini dans la revendication 23, dans lequel l'espace entre l'applicateur (210) et le filet raineur (220) est maintenu, au cours de la formation de la ligne de pliage souple (40), à environ 80 pourcent de l'épaisseur de la feuille APET.

25. Procédé de formation d'une découpe de contenant polymère (100) comportant des lignes de pliage souples (40) à partir d'une feuille de matériau polymère qui comprend les étapes consistant à:
a) fournir une feuille de matériau polymère servant de substrat (200) pour une découpe de contenant (100), et
b) appliquer une énergie ultrasonore à la feuille de matériau polymère pendant approximativement 50 milisecondes de manière à former une rainure souple (40) sur celle-ci en disposant la feuille de matériau polymère entre un pavillon applicateur résonant (210) et une enclume de rainage fixe (220) et à maintenir l'espace minimum entre le pavillon (210) et l'enclume de rainage (220) à une distance qui correspond à 50 jusqu'à 100 pourcent de l'épaisseur du matériau, dans lequel la rainure souple (40) résultante présente un coefficient de flexion compris entre environ 0,2 et 0,4.

26. Un blanc conteneur formé par la méthode de l'une des revendications 1 à 25.

27. Un ensemble formé d'un conteneur vide formé par la méthode de l'une des revendications 1 à 25.
